# EUROPEAN PATENT APPLICATION

(11) **EP 1 102 186 A1**
(43) Date of publication of application: **23.05.2001**
(21) Application number: 00310138.3
(22) Date of filing: 15.11.2000
(51) Int. Cl.: G06F 17/60

(54) **Computer trading apparatus**

(30) Priority: 15.11.1999 GB 9926967
(71) Applicant: Energy Pool Funds Administration Limited, London SE1 9DY (GB)
(72) Inventor: Mitchell, Robert, Energy Pool Funds Administ. Ltd., London SE1 9DY (GB); Doherty, Petra Louise, Energy Pool Funds Adm. Ltd., London SE1 9DY (GB); Yapp, Martin John, St. Albans, Hertfordshire AL1 2JX (GB)
(74) Representative: Beresford, Keith Denis Lewis

(57) **Abstract**

The system, and a method embodied in the same, comprises a unit (260) which receives trading data from aggregators, for storage in a database (250). The data is processed to check its validity and to determine trader credit/debit in the trading arrangement. The system is capable of activating ad hoc payments through a disputes handler (264) and a payment default handler (266). It also maintains a calendar of tasks associated with daily trade, to ensure that all days' processing can be handled in the limited number of available banking days.

## Description

This invention is concerned with computer apparatus for establishing a trading system, and for conducting the trading system between trading parties, and is particularly, but not exclusively, concerned with computer apparatus for facilitating trade in electricity generation and supply services.

In several industrialised countries, and particularly in the United Kingdom, electricity generation and supply is conducted by private companies. The generation and supply of electricity are separate tasks, requiring different technical expertise, and so there has been a division in the electricity industry between generators and suppliers. An intermediate task, of transmission of the generated electricity to the supplies has been conducted by a distributor. Historically, each supplier was assigned a particular area of the country in which to supply electricity to domestic and business customers; in that area a supplier would have monopoly on electricity supply. The only exceptions to that monopoly might be very large consumers who might have a direct relationship with the distributor.

Recently, however, legislation has been enacted in the United Kingdom to provide consumers with further choice in the supply of their electricity. It has been realised that it would be impractical for supplying companies to compete on the physical supply of electricity, since this would complicate the physical electricity distribution network, and would probably not lead to any cost benefit to consumers. Instead, other services can be made the basis of competition between electricity suppliers. These services include billing and maintenance.

For example, a consumer in a particular area may have historically been assigned to a first supplier company, being the company traditionally associated with the area in which the consumer resides. The first company in this example remains responsible for physical supply of electricity in its allotted area. He may choose to be supplied electricity by a second company, other than the first company. That second company need not be a physical supplier of electricity. The consumer would acquire meter reading, billing and maintenance services from that second company. The second company would acquire supply services from the first electricity company such that electricity reached the consumer's property. In that way, the suppliers, and further independent suppliers not previously assigned to particular areas of the country, can compete for customers in respect of the supply of electricity supply services.

The distribution arrangements set out above cause trade in electricity to be more complex than would previously have been the case. Previously, a supplier would have made a payment to the distributor on the basis of electricity consumed within the region assigned to that supplier. This could be measured at grid supply points, where the supplier was physically supplied electricity by the distribution network. There could be one or more grid supply points in a particular region. Then, the distributor would pay the generators for electricity generated thereby and entering the distribution network.

The present arrangement must take into account the possibility that consumers within a supplier's region are no longer customers of that supplier. Further metering arrangements must be made such that consumers not requiring electricity from their regional supplier are properly billed, and their supplier is also properly billed by the distributor. The meter reading at that supplier's grid supply point no longer reflects the consumption of electricity by that supplier's customers.

Trade in electricity is considered on a day to day basis, and payments in respect of a day's trade are made during a single working day. This prevents difficulties with transaction costs, such as tax and interest. However, it is not practical to read the meter of each consumer on a daily basis. Therefore, estimated and forecast data must be used in conjunction with the grid supply point data to establish how much money is payable by each trader to settle the electricity market.

It is an object of the invention to provide a system which can manage the above described trading arrangements, and which can generate billing information from available consumption data, whether complete or incomplete.

Further, electricity is consumed on every day of the year. Ideally, settlement of a day of consumption would be handled a constant number of days after that day (known as the settlement day). However, certain days of the year are not financial trading days, either because they fall at the weekend or because they are bank holidays. Accordingly, billing work which would otherwise be conducted on a holiday must be deferred. This deferral is disadvantageous to generators, because it causes a consistent delay in billing to suppliers, which increases the overall credit period extended to the suppliers from the generators. It is another object of the present invention to provide a system which can generate a schedule for conducting billing in respect of electricity consumption days, on valid financial trading days, so as to provide a consistent credit and billing period.

A first aspect of the invention provides a computer trading system including means for receiving data representative of trade in a utility commodity, means for generating accounts information for trading parties in said trade in said utility commodity, and means for electronically transmitting accounts information to trading parties, such that the system includes user signal receiving means, operable to receive a confirmation signal from a user, before said transmission means is operable to transmit said accounts information.

Further features and advantages of the invention will be apparent from the following description of a specific embodiment of the invention with reference to the accompanying drawings, in which:
Figure 1 is a schematic view of a territory in which a trading arrangement managed by a specific embodiment of the invention is implemented;
Figure 2 is a schematic diagram of an electricity supply system in the territory illustrated in Figure 1;
Figure 3 is a schematic diagram of a trading arrangement associated with the electricity supply system illustrated in Figure 2;
Figure 4 is a schematic diagram showing information transfer associated with the trading arrangement illustrated in Figure 3;
Figure 5 is a schematic diagram indicating payment information transfer in the information transfer illustrated in Figure 4;
Figure 6 is a schematic diagram of a trading management system for the trading arrangement illustrated in Figure 3;
Figure 7 is a schematic diagram of a trading management unit of the trading management system illustrated in Figure 6;
Figure 8 is a schematic diagram of a trading data take on unit of the trading management unit illustrated in Figure 7;
Figure 9 is a schematic diagram of a data receiving unit of the trading data take on unit illustrated in Figure 8;
Figure 10 is a schematic diagram of a payment generation unit of the trading management unit illustrated in Figure 7;
Figure 11 is a schematic diagram of a payment calculation unit of the payment generation unit illustrated in Figure 10;
Figure 12 is a schematic diagram of an advice note generator of the payment generation unit illustrated in Figure 10;
Figure 13 is a confirmation note generator of the payment generation unit illustrated in Figure 10;
Figure 14 is a schematic diagram of a database maintenance unit of the trading management unit illustrated in Figure 7;
Figure 15 is a schematic diagram of a settlement calendar maintenance unit of the database maintenance unit illustrated in Figure 14;
Figure 16 is a flow diagram illustrating a calendar generation process implemented in a calendar generation unit of the settlement calendar maintenance unit illustrated in Figure 15;
Figure 17 is a schematic diagram of a bulk data file to be processed by the trading management unit illustrated in Figure 7;
Figure 18 is a schematic diagram of an individual data file to be processed by the trading management unit illustrated in Figure 7;
Figure 19 is a schematic diagram of a data structure storing data provided in the individual data file shown in Figure 18, after completion of a control balance check; and
Figure 20 is a schematic diagram of an individual data file containing reconciliation information corresponding with the information stored in the data file illustrated in Figure 18.

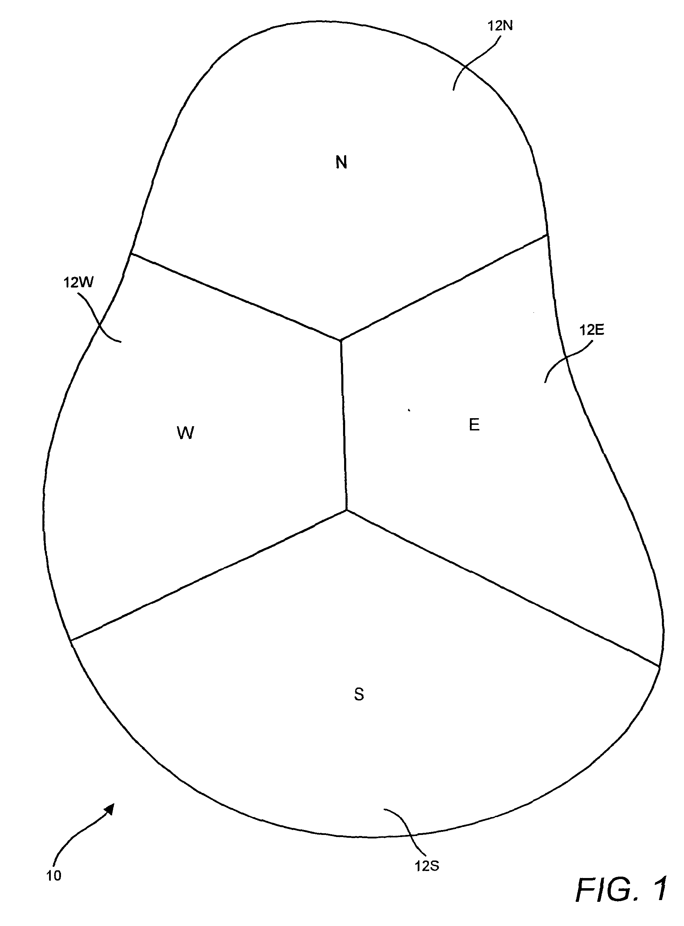

As illustrated in Figure 1, a fictitious territory 10 is divided into four regions 12N, 12E, 12S and 12W, being Northern, Eastern, Southern and Western regions respectively. The fictitious territory 10 is presented by way of example only, and is divided into four regions for reasons of simplicity. However, the invention is applicable to a territory consisting of more or less regions as required; in the case of the territory of England and Wales, the electricity supply arrangement is divided into twelve regions.

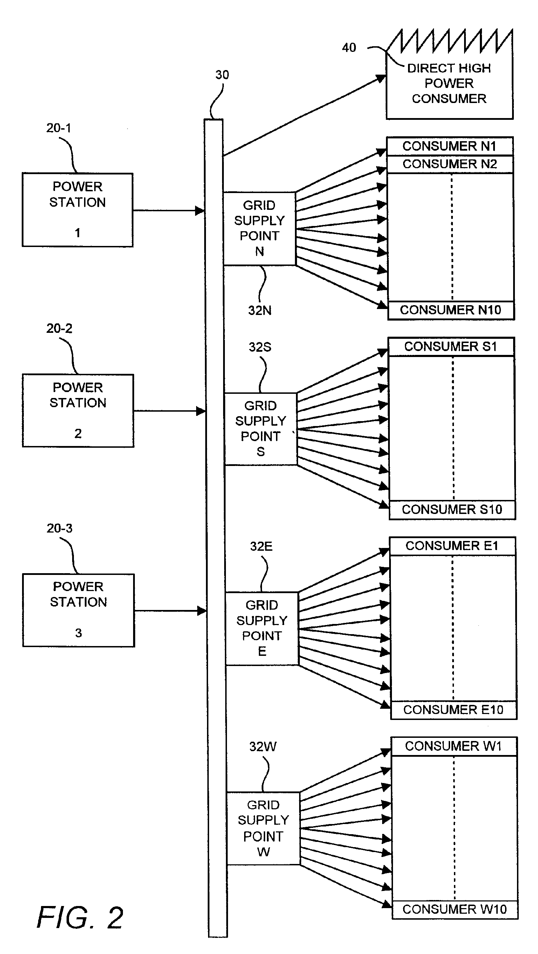

Figure 2 illustrates the arrangement of electricity supply in the territory 10. Three power stations 20-1, 20-2 and 20-3 are connected to a distribution network 30, which has grid supply points 32N, 32S, 32E and 32W corresponding to the regions 12. Consumers N1 to N10, S1 to S10, E1 to E10 and W1 to W10 are physically connected to the distribution network 30 via their respective grid supply points 32N, 32S, 32E, 32W. A direct high power electricity consumer 40 is illustrated, which is directly connected to the distribution network 30, since it requires a very large amount of electricity which is most economically supplied in high voltage form such as would be found on the distribution network. The direct high power electricity consumer 40 includes transformation facilities to step down the supply voltage to a suitable level as required. The other consumers N1 to N10, S1 to S10, E1 to E10 and W1 to W10 are domestic or small or moderate business consumers, which receive electricity in relatively low voltage form (for instance 240 V). This low voltage supply is provided through a grid supply point 32, and subsequent transformer stages (omitted for clarity).

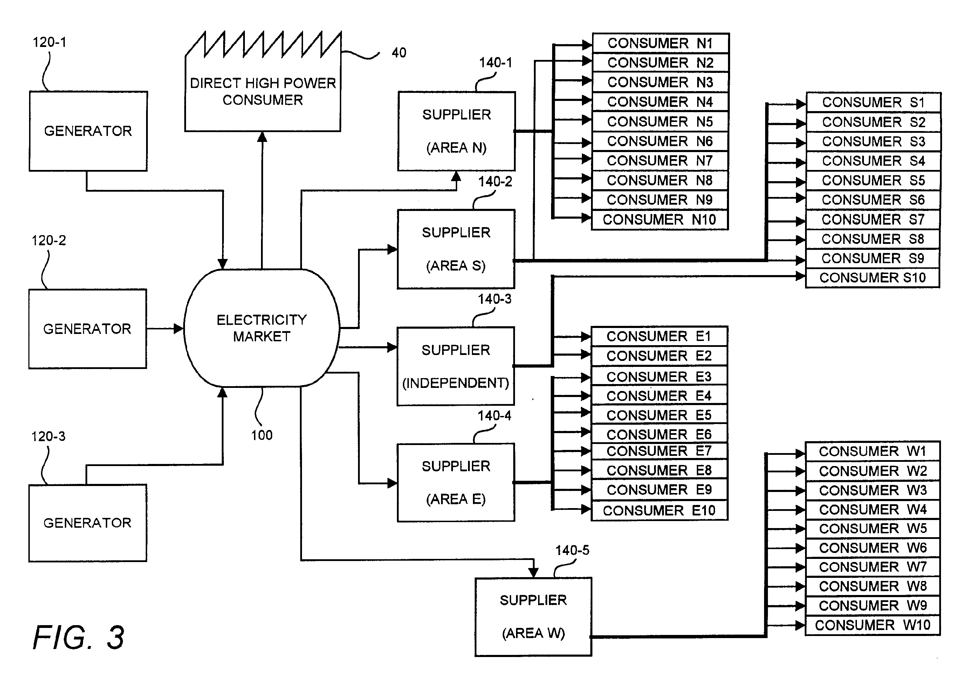

Figure 3 illustrates the commercial arrangement corresponding with the physical electricity supply system of the territory 10. The commercial arrangement is based around an electricity market 100. Generators 120-1, 120-2 and 120-3, which manage the power stations 20-1, 20-2 and 20-3 respectively, provide electricity generation services to the electricity market 100. This provision of a service is illustrated in Figure 3 by means of an arrow directed towards the electricity market 100. The electricity market 100 then provides the direct high power consumer 40 with an electricity supply/distribution service, also identified by an arrow directed towards the direct consumer 40.

Further, suppliers 140-1 to 140-5 draw electricity supply services from the electricity market 100. Supplier 140-1 is indicated in Figure 3 to be associated with the northern region 12N in Figure 1. This corresponds with grid supply point 32N in Figure 2. Similarly, supplier 140-2 is associated with the southern region 12S, supplier 140-4 is associated with the eastern region 12E and supplier 140-5 is associated with the western region 12W. These associations of suppliers 140 with regions 12 reflect that, in the present embodiment, those suppliers have historical links with their respective regions. Those links, in the present case, are resultant from the suppliers' origins as monopolists in the supply of electricity in their respective areas. As such, most of the consumers N1 to N10 in the northern region 12N are recipients of electricity supply services from supplier 140-1. Similarly, most of the consumers S1 to S10 in the southern region 12S receive electricity supply services from supplier 140-2, most of the consumers E1 to E10 in the eastern region 12E receive electricity supply services from supplier 140-4 and all of the consumers W1 to W10 in the western region 12W receive electricity supply services from supplier 140-5.

As an exception to that arrangement, consumer N2 in the northern region 12N has chosen to receive electricity supply services from supplier 140-2. Further, an independent supplier 140-3 is illustrated. This supplier has entered the trading arrangement, in competition with the other suppliers 140-1 to 140-5. It has been selected by consumers S10, E1 and E2 as their electricity supply service provider. The independent supplier 140-3 is not associated with a particular region 12N, 12S, 12E, 12W. It may be a trader in another commodity, such as another utility; further, it could be a generator company acting as a supplier.

This arrangement is possible because of a realisation that it is not necessary for the physical provision of electricity to be carried out by the same party as that which provides electricity supply services. Electricity supply services can include billing, maintenance, customer advice and other services so linked with utilities provision.

In the present embodiment, the physical supply of electricity to a consumer is carried out as shown in the arrangement of Figure 2. The management of physical supply is performed by the supplier 140 associated with the particular grid supply point 32 in question. Therefore, whereas consumer N2 has selected to receive electricity supply services from supplier 140-2, the physical electricity supply is managed by supplier 140-1, because the consumer N2 is in area 12N. Accordingly, whereas the consumer N2 is billed for electricity by supplier 140-2, the billed amount is in respect of electricity physically passing through electricity cables managed by supplier 140-1, between the distribution network 30 and the consumer N2.

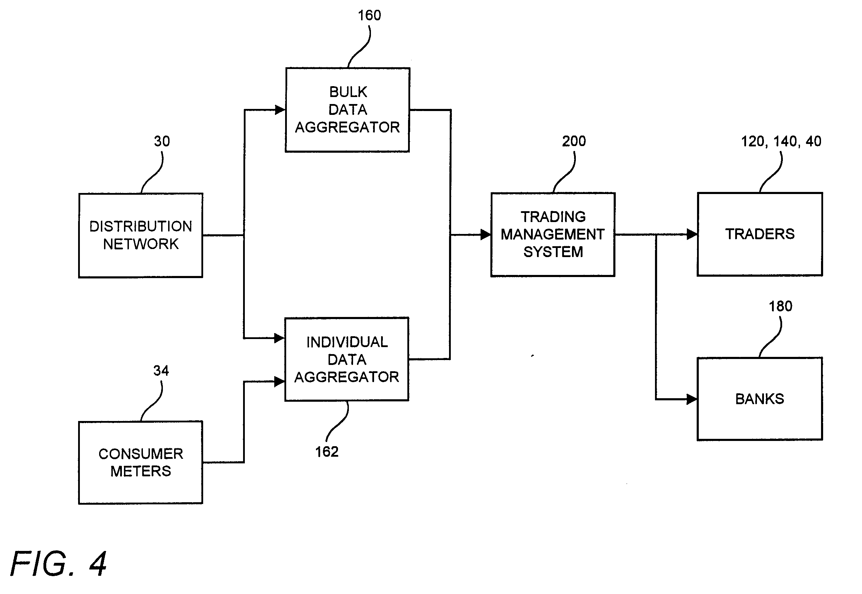

Figure 4 illustrates the arrangement managed by the electricity market 100, which allows resolution of differences between physical electricity supply and billing services.

A bulk data aggregator 160 and an individual data aggregator 162 are arranged to aggregate data collated from the distribution network 30. The bulk data aggregator 160 measures electricity consumption at the grid supply points 32, electricity supplied by the power stations 20, and electricity supplied to the directly supplied consumer 40. The grid supply point data collected by the bulk data aggregator 160 represents overall consumption in each region supplied by the distribution network 30. The bulk data aggregator 160 outputs data representing the collective consumption of consumers N1 to N10, that of consumers S1 to S10, that of consumers E1 to E10 and that of consumers W1 to W10. This data is collected on a daily basis, and requires no adjustments unless a metering error occurs. This is because it is a straightforward aggregation of power consumption measurements at the grid supply points 32 and at the outputs of the power stations 20.

The individual data aggregator 162 receives measurements for and/or forecasts individual electricity consumption. Measurements are received from consumer meters 34. This individual electricity consumption is in respect of each consumer. It is not practical for each consumer consumption to be measured on a daily basis. In fact, it is probably not practical for measurement of any particular consumer to be carried out more frequently than annually. Therefore, the individual data aggregator 162 must perform further calculations in order to prepare figures which will allow suitable measurement data to be generated. These calculations are based upon past consumption figures, weather forecasts, expected behaviour patterns (such as with reference to television programming schedules) and other statistical phenomena.

The data output by the individual aggregator 162 comprises a breakdown, for each supplier, of consumption by its customers in the individual regions 12S served by the grid supply points 32. For example, the individual data aggregator 162 generates data in respect of region 12N, including data relating to supply to customers of supplier 140-1 (which includes estimated consumption by consumers N1 and N3 to N10), and data relating to supply to customers of supplier 140-2 (which includes estimated consumption by consumer N2). Periodically, an actual meter reading will be supplied to the individual data aggregator 162 from each consumer, which would update the individual data aggregator's internal data for generation of aggregated data. Therefore, the accuracy of the data generated by the individual data aggregator 162 is dependent upon regular readings of consumers' domestic electricity meters.

The electricity market 100 is operable to resolve the matter of payments to and from the trading parties in the electricity trading arrangement, to the benefit of all parties. This means that it would not be to the benefit of generators (usually creditors in the trading arrangement) if financial settlement of the market for a particular day of electricity trade was deferred until all consumption data relating to consumers in the trading arrangement were collected. That data might take up to fourteen months to collect. Similarly, it may be to the detriment of one or more of the suppliers (usually debtors to the trading arrangement) if too much reliance was placed upon the accuracy of data generated by the individual data aggregator 162 for the complete and early settlement of the trading arrangement. Early settlement might involve relying on a large amount of estimated data from the individual data aggregator 162, which could be an inaccurate reflection of the actual consumption by consumers who are customers of particular suppliers. It should be noted that generator data is likely to be accurate whenever settlement takes place, because reliance is based upon bulk data aggregators data for that purpose.

Therefore, the trading arrangement governed by the electricity market 100 performs several financial operations over a period of time in respect of a particular day of electricity trade. Firstly, an initial settlement of a particular day of electricity trade is carried out at a specified period after that day of trade. That period is set so as to be sufficiently short that a creditor (usually generator) does not experience financial difficulties, but sufficiently long that the data aggregators 160, 162 are capable of generating aggregated data in respect of that settlement day for use in the trading settlement process. In the present embodiment, data aggregators are capable of generating aggregated data in a minimum of fourteen working days from the day of trade in question. This means that trading parties can be advised of payments due or receivable, payment to be effected about twenty working days after the day in question. Since twenty working days is usually about four calendar weeks, a credit period of twenty eight days can be maintained.

In practice, due to weekends, bank holidays and the like, a credit period of twenty eight days is not attainable for all days of the year. However, the present embodiment generates a schedule, mapping each day of trade to the day on which its initial settlement run is performed, so that an average credit period over a year can be maintained at substantially twenty eight days.

After the initial settlement, a series of reconciliation settlements are performed at regular intervals. The individual data aggregator 162 generates updated data defining the breakdown of consumption by individual suppliers in a particular area, as further and improved data relating to meter readings at consumption is received by the individual data aggregator 162. In the present case, reconciliation runs are performed 35, 80, 150 and 288 working days after the day of trade in question. These periods of time correspond with approximately two months, four months, seven months and fourteen months after the day of trade in question. By the time of the reconciliation runs performed at the fourteen months stage, it would be expected that all consumer meter readings would have been collected, and so consumption data would be based upon real readings in all cases.

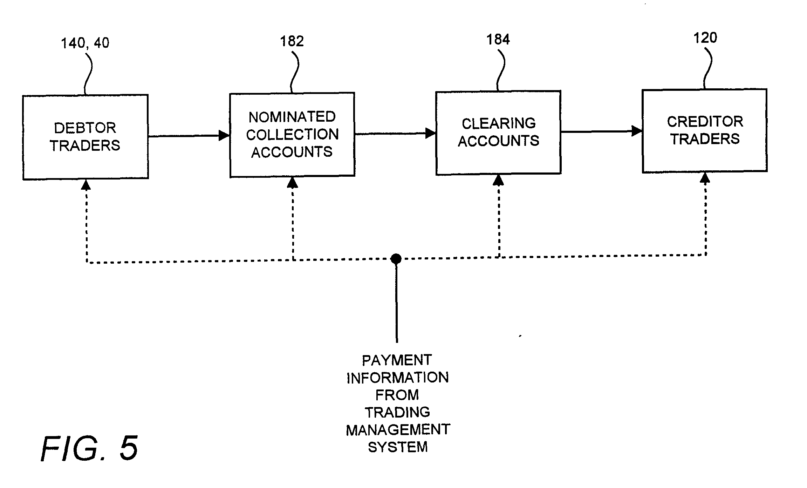

The aggregated data from the bulk data aggregator 160 and the individual data aggregator 162 are delivered to a trading management system 200. This system calculates actual billing figures, which are used in interactions with the traders 120, 140 and banks 180, to cause the electricity market 100 to balance payments against services supplied. Figure 5 illustrates the arrangement in further detail.

Debtor traders, which will include, in most circumstances, the suppliers 140 and the direct high power consumer 40, ultimately need to pay for electricity supply services to creditor traders, which will probably include generators 120. This is carried out by payment information being passed to those parties from the trading management system 200, and to banks 180 which manage nominated collection accounts 182 and clearing accounts 184 to ensure transfer of funds.

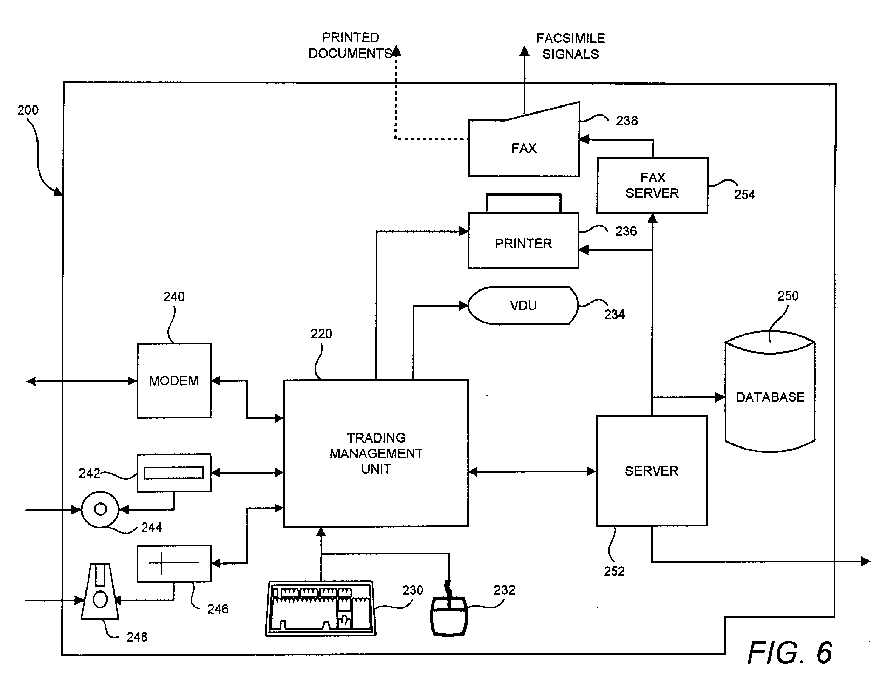

The technical arrangement of the trading management system 200 will now be described in further detail with respect to Figure 6. The trading management system 200 comprises a trading management unit 220, which is a personal computer (PC) system having connected thereto a keyboard 230 and a mouse 232 for user interface. The trading management unit 220 further has connected thereto a video display unit (VDU) 234, a printer 236 and, via a network server 252 and a fax server 254, a fax transmission unit 238. Moreover, the trading management unit 220 has a modem 240 for receiving and transmitting signals bearing data and/or programming information, an optical disk drive 242 for receiving an optical disk 244 (of the CD format) for receiving data and/or programming information, and a magnetic disk drive 246 for receiving a magnetic disk 248 for receiving data and/or programming information.

The server 252 further connects to an external internet, linking most, if not all, trading parties in the trading arrangement. In the present embodiment, an industry specific internet connects the traditional members of the trading arrangement, namely the generators 120 and the regional suppliers 140-1, 140-2, 140-4 and 140-5. Since the independent supplier 140-3 is a new entrant to the trading arrangement, it is not connected to the industry specific network. Other communications methods are used to impart information to the independent supplier 140-3, including sending messages over the Internet or via post or facsimile.

The trading management system 200 further comprises a database 250 storing information for use by the trading management unit 220, in connection with the management of the trading arrangement. The database 250 stores information relating to each trader, past trading information, and work scheduling information as will be described later. Access to the contents of the database 250 by the trading management unit 220 is via the server 252.

The database 250 stores information describing each of the parties to the trading arrangement, including generators, suppliers, direct high voltage customers, and banks. This information will include names, addresses, banking information, electronic communication details (including e-mail address), and company credit ratings.

The database also stores information relating to trading within the trading arrangement, including input aggregated data received from the data aggregators 160, 162 daily, and output payments data generated by the trading management unit 220, also on a daily basis.

Further, the database 250 stores a settlement calendar, including a list of bank holidays for a year in question, and a list of settlement runs to be performed on each working day within that year.

Further, the database 250 stores a series of audit tables, corresponding with the other elements of the database, which record all changes made to the database, and the nature of those changes, be they automatic changes performed by the trading management unit 220 itself, or whether they be changes made by a user through a database maintenance unit of the trading management unit 220. The audit tables can be useful for tracing amendments made to the database information, to ensure that no unauthorised changes are made.

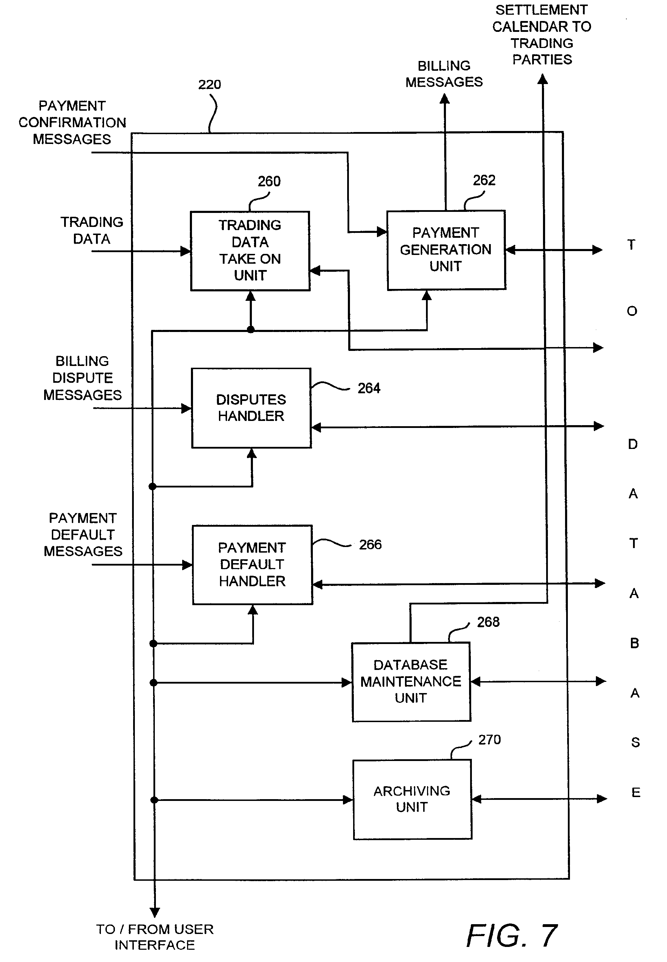

As shown in Figure 7, the trading management unit 220 includes a trading data take on unit 260, which receives trading data from the data aggregators 160, 162. This embodiment is arranged such that data can be carried on a signal received at the modem 240 or via the network connection at the server 252, or can be carried on a storage device, such as a CD 244 or a magnetic disk 248 to be inserted in the appropriate drive 242, 246. In certain circumstances, it might not be possible for the data to be provided in electronic means, and so data might need to be entered manually, by means of the keyboard 230. The trading data take on unit 260 checks the trading data against the contents of the database, to establish that data has been received in the correct form, for the correct day and in respect of the correct settlement runs.

The data files containing data relating to the settlement runs to be performed on a particular day are read from the database, and compared with the particular files received from the data aggregators 160, 162. An error message is generated and sent to the user, via the user interface, if the received data is in some way incorrect. Otherwise, the trading data is processed so as to separate the items of data received, which are then read to the database 250.

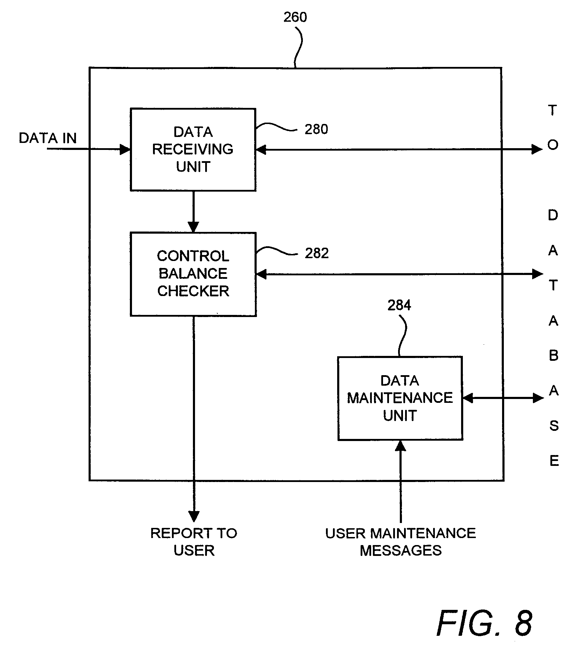

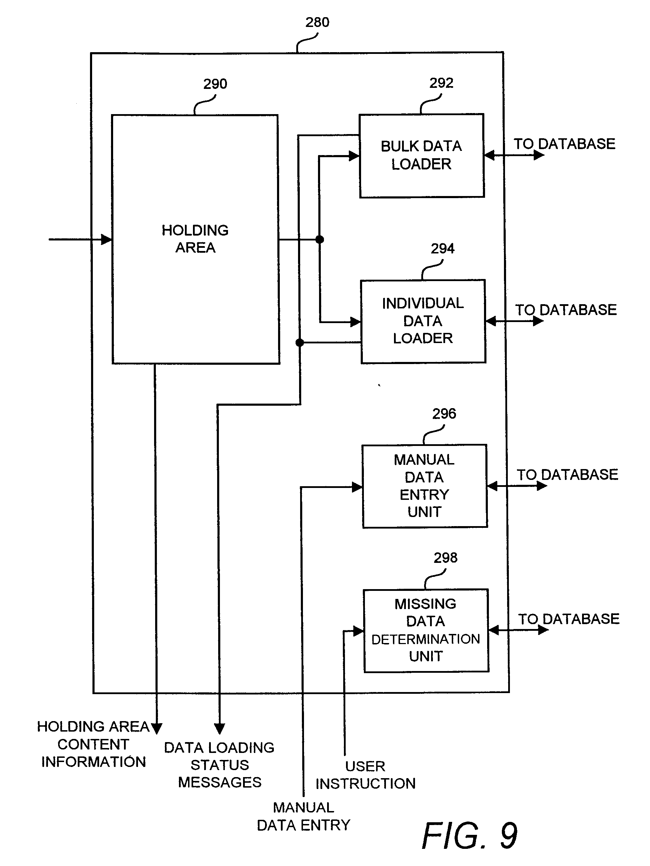

Figure 8 shows the trading data take on unit 260 in further detail. The trading data take on unit 260 includes a data receiving unit 280 which loads the data into the database. Figure 9 shows the data receiving unit 280 in further detail.

The data receiving unit 280 includes a holding area 290 which can receive files from the data aggregators 160, 162. Each file sent from a data aggregator 160, 162 relates to a day of trade, and each file contains data used in initial settlement or in one of the reconciliation settlements. The files received from the bulk data aggregator 160 are lists of information corresponding with the grid supply points 32. The files generated by the individual data aggregator 162 comprise tables of information, the tables consisting of a breakdown of suppliers 140 against the regions 12. The files are held in the holding area 290 so that the user can observe which files have been received before further processing of the data is commenced.

A bulk data loader 292 then identifies files from the bulk data aggregator 160, and loads the data therein into the database. The bulk data loader 292, during the loading process, checks the format of the file, to ensure that it is consistent with the expected format. If the format is inconsistent, then the file is rejected. A data loading status message will be sent to the user, indicating rejection of any file.

Similarly, an individual data loader 294 identifies files received from the individual data aggregator 162, making further checks to ensure consistency with expected file formats.

Rejected files can be reloaded once any identified problems have been resolved.

Whereas the bulk data aggregator 160 only issues one file per day of trade, since grid supply point metering is based upon an actual measurement, the individual data aggregator 162 issues further files for each reconciliation run. In the present embodiment, four reconciliation runs are performed. These are set at 35, 80, 150 and 288 working days after the original settlement day.

The data receiving unit 280 further includes a manual data entry unit 296. This is provided such that if an electronic data file cannot be loaded, the user can enter data manually into the database 250.

Further, a missing data determination unit 298 is provided, which is operable in the event that the trading management unit 220 does not receive data from one or both of the aggregators 160, 162. The missing data determination unit 298 refers to the particular day on the settlement calendar, to establish with which day of trade the expected data corresponds, and refers back to previously received data which is stored in the database 250.

In the event of the absence of data from the bulk data aggregator 160, data from a predetermined preceding day is simply copied to the current billing day. This predetermined day is, in the case of a normal working day or a standard weekend day, the same day in the previous week. In the case of an unusual day, such as one with an important sporting event, the user configures the system to use a more appropriate day. For example, if bulk data aggregator data is not available for Christmas day, the system might look up the data for the previous Christmas, since that would represent the most appropriate match in terms of consumer behaviour.

In the case of absence of data from the individual data aggregator 162, recalculation is based on data for a date specified by the user, but is pro-rated to the received bulk data. This data may be indicated in the same way as for missing bulk data. Therefore, for the purpose of dealing with missing data, it is assumed that the proportion of electricity supplied in a particular grid supply point area, by a particular supplier, is the same for a particular day as for a specified preceding day.

In the case of the absence of data relating to a reconciliation run, data is copied from the previous reconciliation or settlement run relating to that settlement day; that reconciliation run will result in a nil reconciliation bill to be produced on that day.

Once data has been received and loaded, a message is sent by the data receiving unit 280 to a control balance checker 282, which is then activated to check the received data to ensure that it balances. Data is considered balanced when the data received from the bulk data aggregator 160 matches the data received from the individual data aggregator 162. The individual data aggregator 162 provides a detailed breakdown of supply into regions 12 of the territory 10, by electricity supplier. Therefore, the data generated by the individual data aggregator can be aggregated by region to produce figures which should correspond to the data produced by the bulk data aggregator 160. Balance is said to be achieved in the present embodiment when the summed figures from the bulk data aggregator and the individual data aggregator differ by less than £1 overall, and per supply region 12N, 12S, 12E, 12W.

The control balance checker 282 sends a report message to the user if the balance is not correct. The user is prompted to identify the discrepancy, and take suitable action. This might involve making a manual adjustment, or requesting and obtaining a repeat data feed from the party supplying the incorrect data. Manual adjustments can be carried out in a data maintenance unit 284, which cooperates with the database 250 to cause changes to the received data to be made. A repeat data feed could take time to be obtained, but it is possible to defer a reconciliation settlement run if necessary.

A payment generation unit 262 of the trading management unit 220 reads the received data from the database 250, to generate billing messages to be sent to trading parties. These billing messages are sent to trading parties so that payments can be effected by debtor trading parties to the banks, and then from the banks to creditor trading parties. The payment generation unit 262 is operable in response to messages sent from the user via the user interface. Whereas the payment generation unit 262 could be completely automatic, there would then be no interactions between the user and the trading arrangement, which might lead to false calculations being inadvertently sent as bills to traders. This might be difficult to correct, and could lead to problems associated with tax, particularly if a billing error takes several days to resolve. Instead, the payment generation unit 262 is only operable to send billing messages on receipt of a confirmation message from a user, via the user interface.

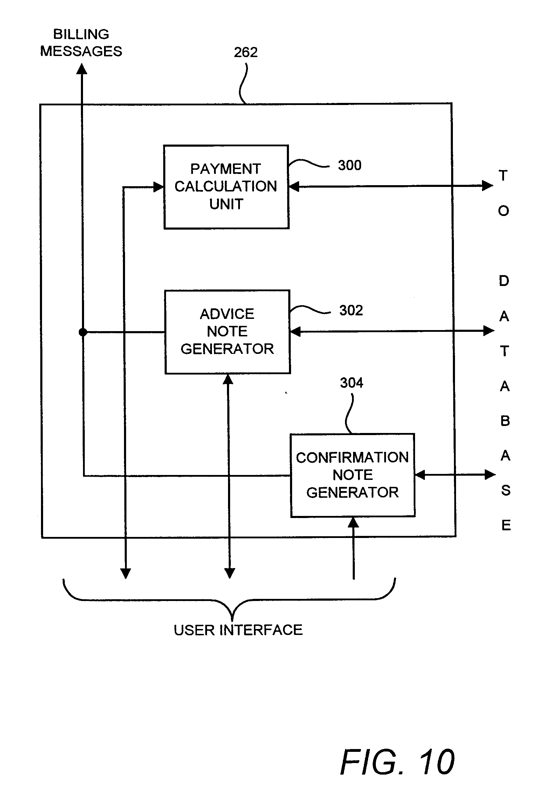

Figure 10 shows the payment generation unit 262 in further detail. The payment generation unit 262 includes payment calculation unit 300, which generates, in respect of each trading party, a bill reflecting the trading data received in the trading data take on unit 260. The bill refers to any transaction tax or interest which may need to be added to the bill.

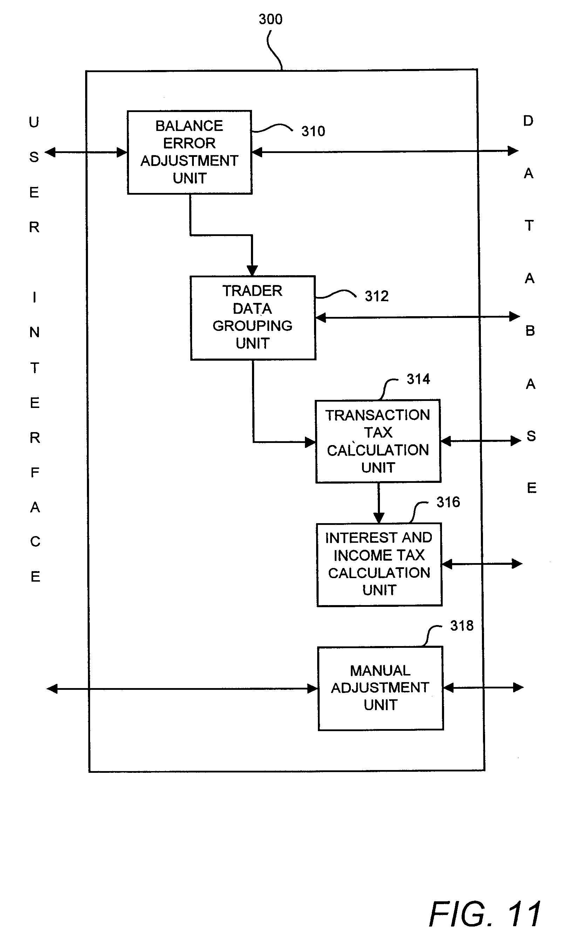

Figure 11 shows the payment calculation unit 300 in further detail. The payment calculation unit 300 includes a balance error adjustment unit 310, which adjusts the data generated by the individual data aggregator 162 so as to match the bulk data aggregator 160 generated data, provided that the relevant control balance check performed in the control balance checker 282 succeeds. The control balance check operates to a tolerance which, in the present embodiment, is set to ninety nine pence.

In the present embodiment, any balance error which is identified as being within tolerance is automatically adjusted in the highest total of all the quantities of trading data, per grid supply point, supplied by the individual data aggregator 162. In the event of the balance error exceeding the balance, data correction can also be performed by the user interface as a manual operation.

Following balance error adjustment, the balance error adjustment unit 310 sends a message to a trader data grouping unit 312, indicating that the appropriate control balance checks have been passed. The trader data grouping unit 312 will then group all of the data corresponding to a trader, across all regions 12 of the territory 10, to produce a trading total. Trading totals are then stored in the database 250, and a message is sent by the trader data grouping unit 312 to a transaction tax calculation unit 314. This transaction tax calculation unit 314 calculates transaction tax (value added tax in the United Kingdom) in respect of data stored in the database, and calculated in the trader data grouping unit 312. Transaction tax is calculated on the basis of a tax code stored in respect of a trader in the database. A tax code consists of a tax rate structure, which can be a single rate or a series of rates which depend upon transaction type or magnitude.

Since different commercial entities may have different transaction tax rates, in accordance with their commercial status, shortfalls or excesses in transaction tax may appear. This is resolved in the account of the trading arrangement itself by creating an artificial trader for handling transaction tax. The artificial trader is constituted to receive and pay out transaction tax as required; this is a convenient manner of handling transaction tax in the present embodiment.

Once the transaction tax calculation unit 314 has generated amounts for transaction tax, these figures are passed to the database 250. Then, a message is sent to an interest and income tax calculation unit 316, which refers to the grouped trading data and transaction tax data stored in the database 250, and determines interest and income tax payments. Interest will arise from reconciliation payments taking place several weeks or months after the settlement date, on which income tax is payable in certain countries (including the United Kingdom).

This interest and income tax data is then also stored in the database in respect of the trading data and the transaction tax data. A manual adjustment unit 318 is provided which can act on the basis of messages sent by a user via a user interface, to adjust the trading data and associated transaction tax, interest and income tax data, if required. Finally, the manual adjustment unit 318 is operable to create a trigger message to the advice note generator 302.

The information generated by the payment calculation unit 300 is stored in the database, which is then referred to by an advice note generator 302, which produces documents to be sent as billing messages, by both post and facsimile. However, prior to sending, a user confirmation must be received from a user. The advice note generator 302 requests a user to confirm that the advice note generated should be sent. This human interaction is important, as a human may use experience to assess whether the advice notes are expected to be correct. Following issue of the confirmation, the advice note generator transmits the advice notes to the printer 236, and/or the facsimile transmission unit 238, for transmission of billing messages to the traders 120, 140, 40.

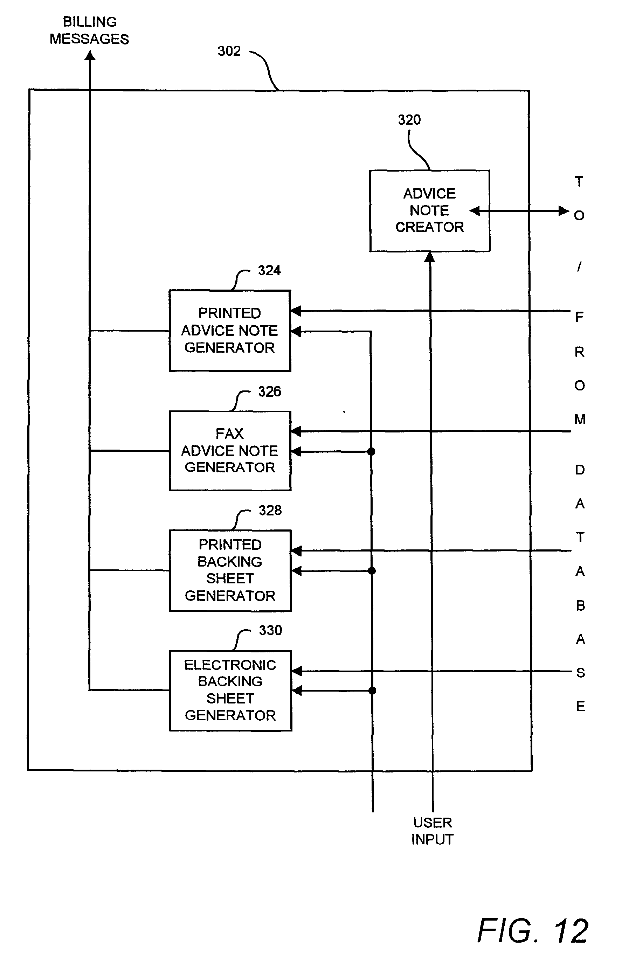

The advice note generator 302 is described in further detail with reference to Figure 12. The advice note generator 302 includes an advice note creator 320. This receives a trigger message from the payment calculation unit 300, and draws information from the database to assemble an advice note in respect of each trading party affected by the generated data. The data drawn from the database includes an advice note number, the settlement date in question, the advice note date, a payment date (advisory for use by the trader), a trader identification, a pay flag (indicating whether the advice note is in respect of credit or debit), the amount of the advice note excluding transaction tax, the amount including transaction tax and the amount of interest, income tax etc, which is payable or receivable.

This information is passed to a printed advice note generator 324, which assembles the data into a print job to be sent to the printer 236. As indicated in Figure 10, the sending of a print job is activated by user confirmation message. Similarly, a fax job is sent by a fax advice note generator 326. Again, this is user confirmation actuated.

Further, backing sheets are associated with an advice note, each backing sheet indicating a detailed breakdown of the calculation from which the amount payable is calculated. This breakdown shows amounts payable by or to a trader in respect of consumption in each specific grid supply point region 12 for that trader. No information is given which could compromise other traders in competition with the trader in question. The system is operable to prevent a trader from identifying from its own data how another trader is performing in the market.

This is important as it allows for competitive and commercially confidential trading.

In that regard, a printed backing sheet generator 328 and an electronic backing sheet generator 330 are provided in the advice note generator 302. The printed backing sheet generator 328 is operable in response to a user confirmation message to generate a print job at the printer 236, printed backing sheets to be sent with the printer advice note to trading parties. These backing sheets are for information, and do not form part of the advice note itself. The electronic backing sheet generator 330 generates a message which can be sent via the modem 240 to trading parties. This electronic message contains the same information as is presented on the printed backing sheet.

A confirmation note generator 304 of the payment generation unit 262 waits for payment confirmation messages to be input by the user, having received information from the banks 180 that payments have been received and passed on to creditors. When user confirmation messages have been received, then confirmation notes are generated in the confirmation note generator 304, which are then sent to the printer 238, for generation of a printed document for posting to traders.

Manual input of bank payment confirmation is useful because it ensures no external direct access to the means of generating confirmation notes, which otherwise could be used fraudulently to recoup taxes payable on transactions.

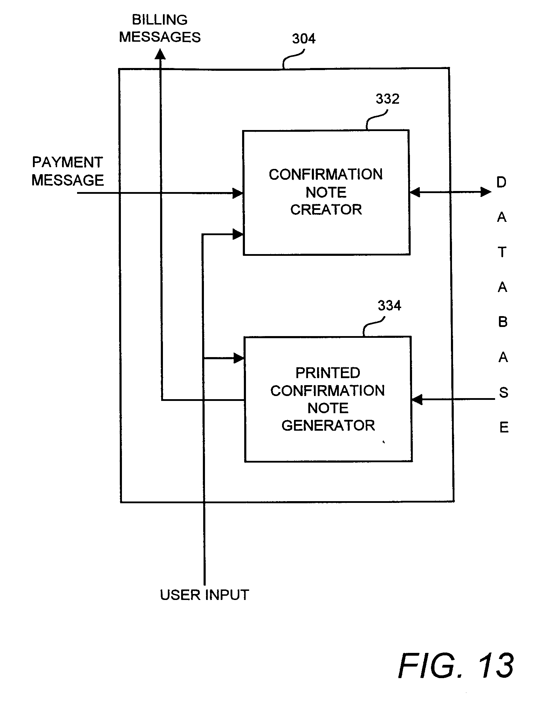

The confirmation note generator 304 is illustrated in further detail in Figure 13. A confirmation note creator 332 is operable to receive a payment message, entered manually by the user, from a bank 180 reporting payment from a trader 140, or processing payment to a trader 120. The confirmation note creator creates a confirmation note, on the basis of the same information as is contained on the corresponding advice note. This is then passed to a printed confirmation note generator 334, which sends a confirmation note print job to the printer 236 for printing and posting to the trader. Confirmation notes are used to process transaction taxes (VAT in the United Kingdom), which can be claimed back from the authorities in certain circumstances. They are also used as a formal record of actual payments made or received, with corresponding tax payments.

A dispute handler 264 is operable to receive billing dispute messages, received from the user or from the modem 242. Disputes comprise disagreements between traders as to the validity of aggregated data generated by the data aggregators 160, 162 for particular trading days. In the first instance, a resolution between the traders is attempted without reference to the present embodiment, but it may be that resolution through the trading system is required if the dispute becomes complex.

The dispute handler 264 is operable to apportion a disputed payment between trading parties, by generating an ad hoc payments schedule to supplement the regular payments regime between those parties. Advice notes corresponding to that ad hoc payments schedule are generated by the disputes handler 264, and, in due course, confirmation notes are also generated.

A payment default handler 266 is responsive to a payment default message received from a bank 180, monitoring payments to and from trading parties. In the event of payment default, the market must be balanced, and this is achieved in one of several alternative manners. Firstly, the market could call upon a borrowing facility, so that generators' payments are still honoured though a supplier's payment has not been received. Secondly, credit facilities of the defaulting party can be used, such as a letter of credit, or a parent company guarantee, so that funds are made available for market balance. The payment default handler directs a user to identify the preferred manner of default settlement.

Balance of the market is necessary in order to simplify transaction tax arrangements.

A database maintenance unit 268 is operable in response to messages from the user to maintain data held in the database. This maintains data include trader details (e.g. names, addresses, credit ratings, bank details etc) and the settlement calendar which identifies the schedule of days of trade to settlement days. The settlement calendar is designed such that the workload of the data aggregators 160, 162 and the trading management unit 220 can be maintained at a satisfactory level, without becoming overloaded on particular days. This is particularly important given that certain periods of the year include a number of consecutive holidays, in respect of which trading continues, but when payments cannot be effected because banks are closed. The settlement calendar is generated so that work can be deferred or brought forward without affecting the overall average credit period for that year.

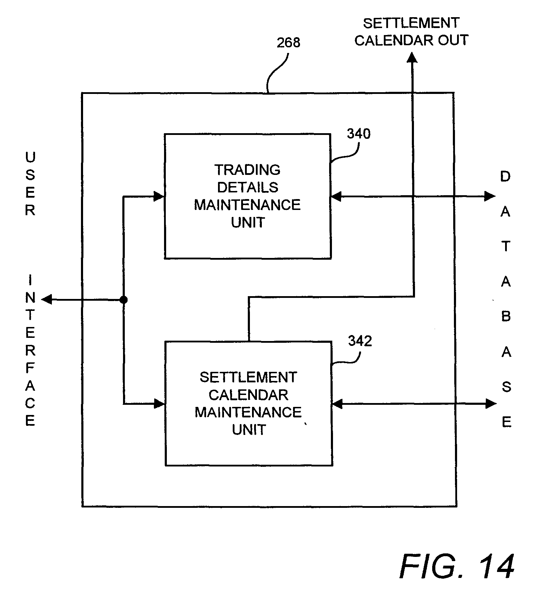

Figure 14 shows in further detail the database maintenance unit 268. The database maintenance unit 268 includes two elements. Firstly, a trading details maintenance unit 340 is used to allow amendment of data stored in the database 250, relating to each trader. This amendable data includes addresses or telephone numbers stored in respect of each trader. For example if a trader changes address, the user can input commands which allow amendment of the contents of the database, via the trading details maintenance unit 340, to reflect that change of address.

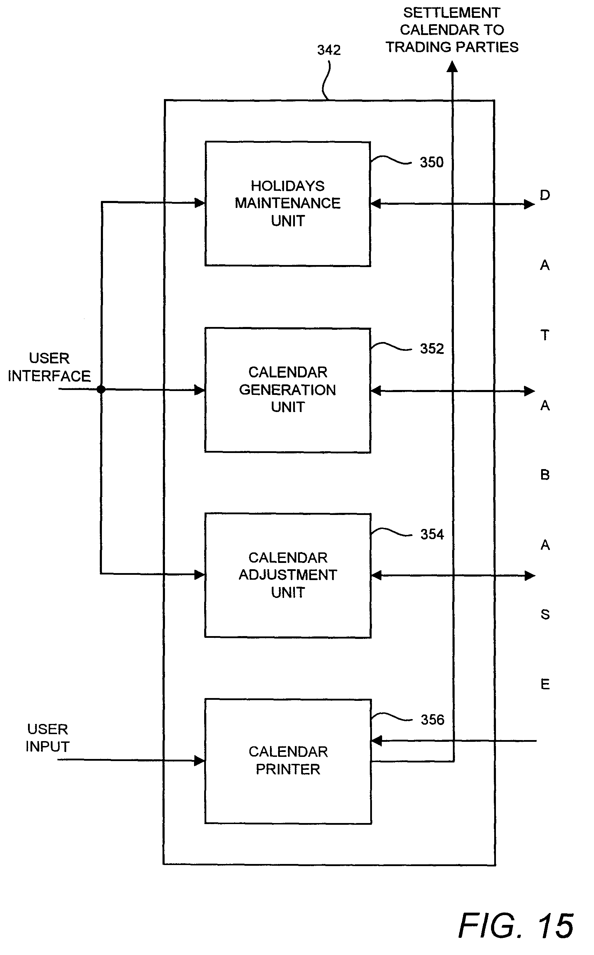

A second element of the database maintenance unit 268 is a settlement calendar maintenance unit 342. This settlement calendar maintenance unit 342 generates and maintains the settlement calendar which directs the data aggregators 160, 162 to generate aggregated data on specific days in respect of specific settlement days. This unit is shown in further detail in Figure 15.

The settlement calendar maintenance unit 342 includes a holidays maintenance unit 350. A user can use the holidays maintenance unit 350 to maintain a list of days in a particular year in the database 250, those days being ones, other than weekends, on which payments cannot be made. These days would include national bank holidays.

Further, a calendar generation unit 352 is operable to generate a settlement calendar on the basis of stored information relating to holidays, maintained by the holidays maintenance unit 350. The calendar generation unit 352 outputs a list of work to be carried out on specific working days in respect of the settlement days.

A calendar adjustment unit 354 allows manual adjustment by a user of the settlement calendar generated by the calendar generation unit 352 and stored in the database 250. This allows a user to amend a settlement calendar if necessary.

Finally, a calendar printer 356 is operable to retrieve the settlement calendar from the database 250, and print out the settlement calendar for a specific year. The calendar printer 356 also generates a soft copy of the calendar, to be placed on a storage medium, such as an optical disk 244 or a magnetic disk 248, for output to a third party. Output may also be conducted by means of a computer network, such as the Internet.

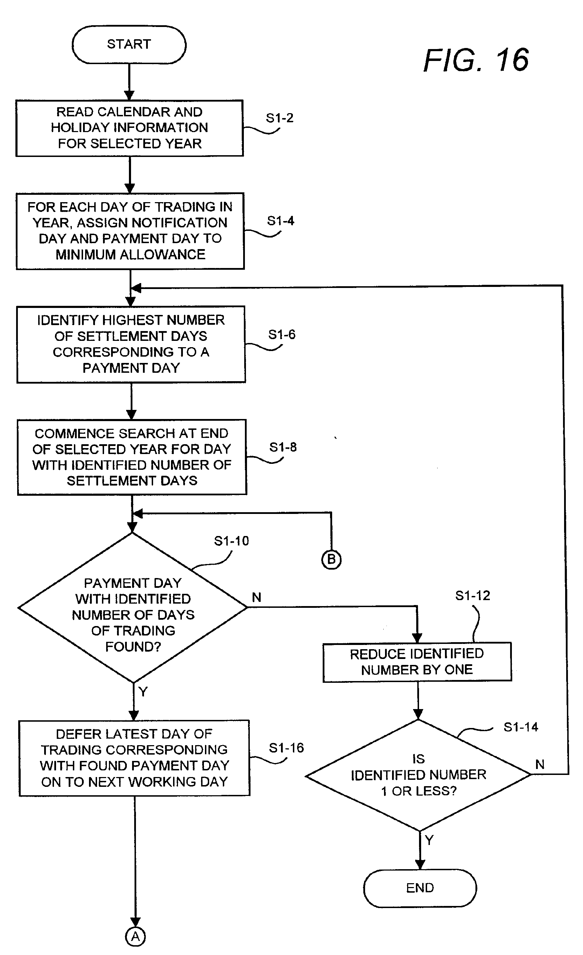

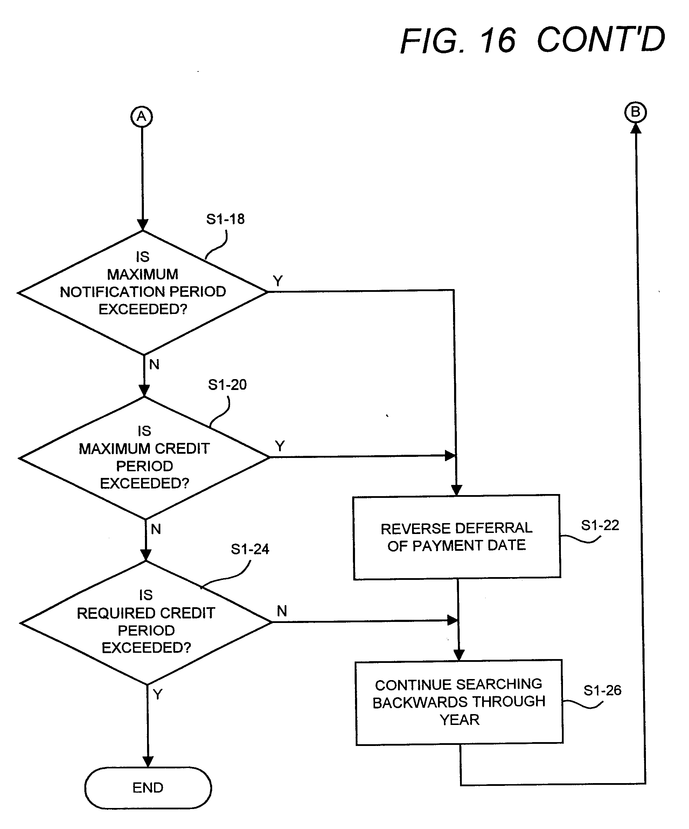

The operation of the calendar generation unit 352 is indicated in further detail in Figure 16. The operation is in the form of a process which is performed on receipt at the calendar generation unit 352 of a user command.

The process begins with a step S1-2 wherein the calendar for a particular year (indicated by the user) is read, and the corresponding holidays information stored in the database 250 is also read. Year selection is carried out by a user at a user interface. Production of a calendar, mapping days of a year to the days of a week (Monday, Tuesday, ... Sunday) is relatively straightforward, and is provided in commercial packages such as Oracle. A list of those days of the year is created in memory of the trading management unit 220.

In step S1-4, for each day of trading (i.e. every day of the designated year), a notification day is assigned, which is fifteen working days after the settlement day in question. Fifteen is a minimum number of days which can be accommodated by the data aggregators 160, 162. The notification day is the day on which the initial settlement is performed in respect of the day of trading. Further, a payment day is also assigned to each day of trading; the payment day is always three working days after the notification day. This allows a trader receiving notification on the notification day to initiate payment for the payment day by a three day payment method.

Then in step S1-6, the list of days is reviewed and those working days having the highest number of days of trading assigned thereto are identified. Certain days of the week will have three days of trading associated therewith. This is because Saturday and Sunday are never working days, and so Saturday and Sunday days of trading will correspond with the same payment day as that of the subsequent Monday. Further, other working days may have even more days of trading associated therewith, since bank holidays cause a larger number of consecutive non working days of trade to arise.

Then in step S1-8, a search is commenced from the end of the selected year, for a day with the identified highest number of days of trading associated therewith. Step S1-10 identifies whether such a day is found. If not, then the identified highest number is reduced by one in step S1-12, and this number is then checked in step S1-14 to ensure that it is not less than two. If the number is less than two, then the calendar has been refined as far as possible and the procedure ends. If the identified number is two or more, then the procedure repeats from step S1-6 onwards. The procedure continues to the state where the number is two or more since it is possible for deferral of days to be necessary, not just to satisfy the need for reducing workload, but also to ensure that the specified credit period is attained.

Alternatively, in step S1-10, if a payment day is found with the identified number of days of trading, then in step S1-16, the various days of trading associated with that payment day are considered, and the calendar is amended to place the payment day for the latest of those days of trading on the next working day of the calendar.

Then, in step S1-18, a check is made as to whether a maximum notification period has been exceeded. This maximum notification period is, in the present embodiment, set at nineteen working days. This ensures that, in a regular month, notification usually does not take place more than about four weeks after the day of trading in question. If the maximum notification period is exceeded, then in step S1-22, that deferral of the data is reversed.

If the maximum notification period is found not to be exceeded in step S1-1, then a further enquiry is made in step S1-20, to establish if a maximum credit period has been exceeded. This maximum credit period is, in the present embodiment, set at thirty one (actual) days. Whereas the average credit period over a year is aimed to be twenty eight days, the actual credit period in a particular month may be more or less than that period. In the present embodiment, the trading arrangement has been established such that a generator need not wait more than thirty one days for payment. If the settlement calendar as adjusted by the deferral is such that the maximum credit period has been exceeded, then the procedure continues with step S1-22 as described above.

Otherwise, the procedure continues with a further enquiry in step S1-24, to establish if the required credit period averaged over the year is exceeded by the deferral. In the present embodiment, the required average credit period is twenty eight days. This required average credit period is calculated over all days and over a full year, to establish how it is adjusted by deferral of one day. If the procedure finds that the required average credit period has not been exceeded by the deferral, and in any event after step S1-22, then the procedure continues in step S1-26 by continuing the search back though the year for another working day with the identified number of payment days assigned thereto for a further referral attempt, from step S1-10 onwards.

Otherwise, if the required credit period is exceeded slightly, then the procedure ends.

The settlement calendar generated by the calendar generation unit 352 using the procedure illustrated in Figure 16, produces a settlement calendar in a very short period of time. This settlement calendar is incomplete, in the sense that it only considers the notification in respect of the initial settlement which takes place approximately seventeen working days after the settlement date in question. Reconciliation runs are then inserted into the settlement calendar by the calendar generation unit 352. These are inserted at exact periods, such that their notification periods are 35, 80, 150 and 288 working days after the settlement date in question, and payment days three days thereafter. No adjustment of the reconciliation runs schedules are performed. This is because the billing adjustment resultant from reconciliation runs will probably not affect generators, whose payments would have been based on bulk data aggregator 160 data, and may be to the benefit or to the detriment of any of the suppliers. No trading party is likely to be a consistent beneficiary of reconciliation. Accordingly, an extension of credit period as a result of deferrals of reconciliations through holidays or the like will not be consistently detrimental to any particular trading parties. In contrast, if credit periods in respect of the first settlement runs are consistently too long, then generators will consistently suffer.

Finally, an archiving unit 270 is operable on receipt of an archiving message from the user, to archive trading data held in the database for secure storage purposes.

The present embodiment allows for the fact that a supplier may also be a generator. This means that a single commercial entity may have two or more trading identities in the present arrangement. That commercial entity would then be the subject of two calculations, one being in respect of supply, and the other in respect of generation.

Further as an alternative to the present embodiment, a supplier of electricity supply services need not itself provide any of the services specified. All or some of the services, such as billing, or maintenance could be contracted out to third parties, the supplier merely being a negotiator between consumers and providers of those services. This might increase competitiveness and therefore end prices to consumers.

Further as an alternative to the present embodiment, the one pound balance error tolerance could be reduced or increased as required under the conditions of trading within the trading arrangement. Higher tolerances could be accommodated in systems involving a very large amount of trade, in which larger amounts than in the present example would be treated as trivial, whereas in a small trading arrangement, small tolerances would be allowable so as to retain tight control over balance errors.

Further, missing data in the data received from the individual data aggregator 162 could be handled in several alternative ways, depending on the accommodation provided in the trading arrangement. In one case, the entire run to which the data referred could be deferred for a later time to allow the data to be assembled and retransmitted to the trading management unit. Moreover, in the case that data generated by the data aggregators was found to be in some way inaccurate, due to a processing error, each data aggregator is capable of issuing ad hoc data to correct such an anomaly, which could be processed through the trading management unit as an ad hoc run to be treated as a reconciliation payment run.

Whereas the present embodiment has been described with regard to sending advice notes by post and fax simultaneously, it could be preferred to send such communications by one or other means only. Further, advice notes could be sent by electronic means. Additionally, confirmation notes could be sent by electronic means, including facsimile, if local regulations relating to confirmation notes allowed.

The minimum period between a day of trading and its corresponding notification day has been described as fifteen days in the above embodiment. However, it will be appreciated that this period could be longer or shorter, depending on whether a data aggregator can supply data in a particular period of time, or as trading arrangements allow. For instance, a trading arrangement could be negotiated such that an initial settlement run is to be performed five working days after a day of trading. A data aggregator would then need to be able to supply aggregated data somewhat before the fourteen day limit described above. Similarly, in a trading arrangement where payment in respect of a day of trading was to be later than the present twenty eight day credit period specified, a data aggregator would issue aggregated data later. This might obviate the need for one or more of the reconciliation runs, which are devised to make allowances for the fact that the individual data aggregator 162 is being directed to issue early incomplete data in order to maintain a credit period which is acceptable to all parties in the present trading arrangement.

Whereas the present embodiment has been described with regard to a three day payment cycle, certain electronic means of payment are based upon paying on the same day as notification of payment amount to be made. Therefore, the present invention could also apply to a system whereby notification and payment were made on the same day, or a system whereby any number of days could be interposed between notification and payment.

The calendar generator of the present embodiment has been described with a limit of thirty one days being placed on the credit period in relation to any particular day of trading. The generation of a final acceptance calendar may not be possible with a such a tight limit, and so, with the agreement of the parties to the trading arrangement, this maximum may be increased as appropriate. This would be particularly be useful in the case of a year with several bank holidays in a short period of time, where it is difficult to accommodate all requirements if such tight limits are applied.

Further, the operation of the calendar calculation unit could be applied conversely to a situation whereby preparatory work to daily deadlines needs to be scheduled over a period of several working days before the deadlines. The principles of operation can be applied in reverse such that the day to which work is scheduled precedes the deadline day.

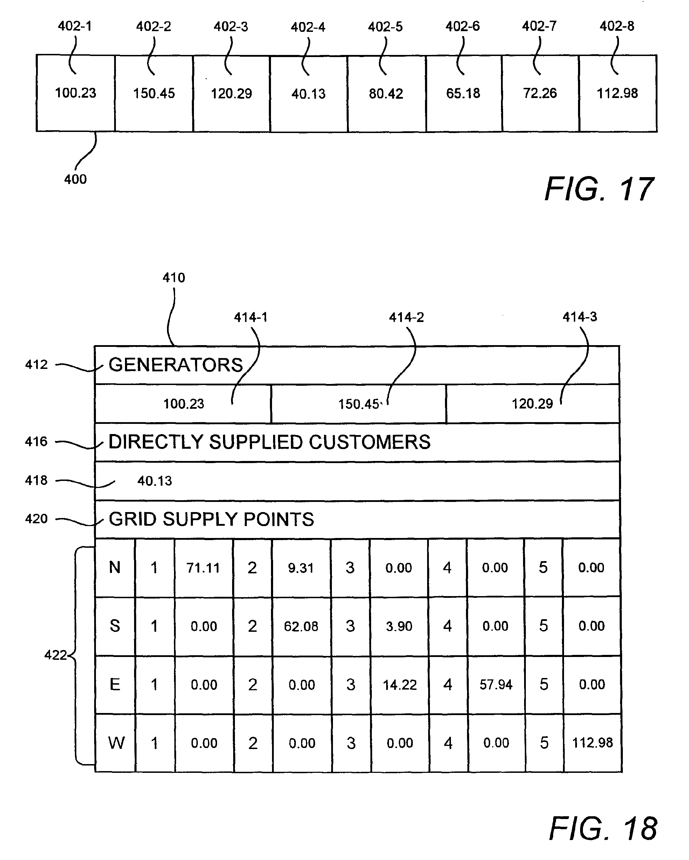

Operation of the apparatus of the described embodiment will now be explained with reference to Figures 17 and 18 of the drawings. Figure 17 illustrates a file received from the bulk data aggregator 160 in respect of a particular day of trade. Figure 18 illustrates a file received from the individual data aggregator 162 for the same day of trade. The files are named, in use, so as to render them recognisable as corresponding to a particular day of trade.

The file 400 illustrated in Figure 17 comprises a list of eight numbers 402-1 to 402-8. These numbers can be separated by null characters, such as spaces, to separate the numbers adequately so that the bulk data loader 292 can identify the particular numbers and load them separately into the database. The first three numbers 402-1 to 402-3 correspond with the generators 120-1 to 120-3. These numbers represent monetary values of a consumption of electricity generated by each of those generators. The value stored in the element 402-4 is a monetary value for consumption by direct high power consumer 40. The remaining elements 402-5 to 402-8 contain monetary values relating to consumption at each of the grid supply points 302N to 302W.

The data structure of the file 410 illustrated in Figure 18 as having been received from the individual data aggregator 162 is delimited by text titles and tabulating characters as will now be described in more detail. Firstly, a key word "Generators" 412 precedes three elements 414-1 to 414-3 which store monetary values for power consumption from the three generators 120-1 to 120-3. These monetary values should correspond with the value stored in elements 402-1 to 402-3 in the data received from the bulk data aggregator 160. Secondly, a section headed by a header "Directly Supplied Customers" 416 precedes elements 418 which store monetary values for consumption by directly supplied customers 40. In this case, only one customer is directly supplied, and so only one element 418 is present. Then, a further section is headed by a header "Grid Supply Point" 420, following which is a table 422 of monetary values which break down, per grid supply point, monetary values for consumption by customers of each supplier company 140-1 to 140-5.

Initially, these files arrive in the holding area 290 from their sources. The files are named, as noted above, so as to be recognisable to the user. The user makes a note of the files which have arrived from sources, against the files which would be expected having regard to the calendar generated in the previously described calendar generation procedure as illustrated in Figure 16. If any files are missing from the holding area 290, the user makes contact with the data aggregator responsible, and attempts to rectify the situation. The user can then use the missing data determination unit 298 to either generate a replacement set of data based on previous data, or to abort the settlement procedure until data can be obtained from the required source.

With regard to the files 400, 410 which have arrived from the data aggregators 160, 162, the bulk data loader 292 loads the bulk data file 400 into the database.

The data generated by the individual data aggregator 162, and contained in the file 410 received therefrom, analysed by the individual data loader 294 in accordance with the various headers 412, 416, 420 contained in the file 410. The individual data loader 294 is responsive to the header "generators" 412 to expect a series of monetary values relating to generators. In the present example, these monetary values are not delimited by any identifying terms, but the individual data loader recognises the order in which those elements are received as corresponding with the order in which generators are signed, as illustrated in Figure 3. Therefore, the element 414-1 (containing the monetary value 100.23) corresponds with generator 120-1, etc.

Then, the individual data loader 294 encounters the header "directly supplied customers" 416. The individual data loader 294 is responsive to that header to terminate the recognition of generator data, and to initiate the recognition of directly supplied customer data. This data is held in a series of elements 418, of which in this example there is only one.

Thereafter, the header "grid supply points" 420 is encountered by the individual data loader 294, and this terminates the direct loading of directly supplied customer data. Further, the individual data loader 294 is responsive to the "grid supply points" 420 to expect a series of lists of data breaking down the consumption of electricity at each grid supply point by individual supplier company 140. Each list 422 is headed by an identifying letter N, S, E, W which identifies the particular grid supply point (32N, 32S, 32E, 32W) to which it corresponds. Following the heading letter, a list of values, preceded by an identifying number (corresponding with the terminating number of the various suppliers 140 illustrated in Figure 3), each element containing a monetary value relating to consumption by customers of that supplier in the region 12 to which that grid supply point 32 relates. These data are loaded into the database 250.

The control balance checker 282 then performs a check on the monetary values contained in the elements 402-1 to 402-8, to ensure that the data is consistent. In particular, the data relating to the generators should balance the data relating to consumers. This means that some of the contents of the elements 402-1 to 402-3 relating to the generators must equal the sum of the content of the elements 402-4 to 402-8 relating to consumption. In this case, the data is consistent, and so loading is completed without error.

Then the control balance checker 282 performs a check on the data contained in the lists 422, loaded into the database, to ensure consistency with the data received from the bulk data aggregator 160 in the elements 402-5 to 402-8 of the file 400. The first list 422N, relating to the grid supply point 32N, has elements containing monetary values whose sum is £80.42. This corresponds with the contents of element 402-5, which relates to grid supply point 32N in the bulk data file 400. Therefore list 422N passes the consistency check. The control balance checker 282 then passes its attention to list 422S whose elements contain monetary values to the sum of £55.98. This is inconsistent with the contents of the corresponding elements 402-6 in file 400. The control balance checker 282 notes that the inconsistency is £0.80 (80 pence) and so is less than the tolerance level previously described as being one pound. Therefore, the control balance checker 282 adjusts the highest monetary value contained in that list 422S to render the sum consistent with the monetary value held in element 402-6. Therefore, element 2 of the list 422S is adjusted from £62.08 to £51.28.

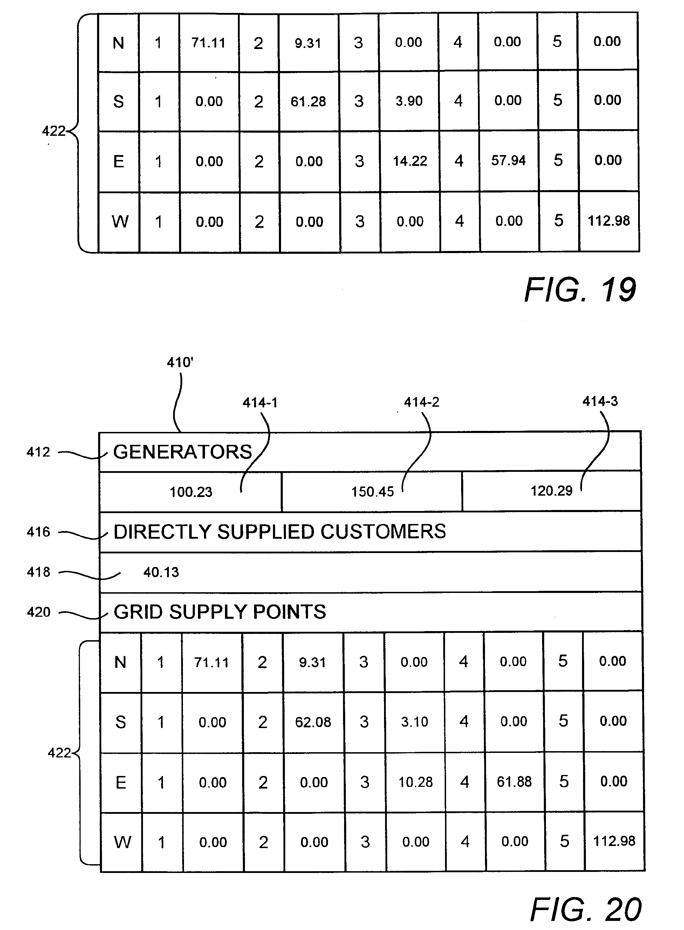

Figure 19 illustrates the list 422 after adjustment and stored in the database 250. Element 2 of list 422S is shown as having been adjusted. Following loading of the adjusted data into the database 250, the payment generation unit 262 of the trading management unit 220 draws the stored data from the database, and creates payments data based thereon. This payments data is then stored back in the database. In the present example, no processing needs to be carried out to generate payment data relating to the generators or relating to the directly supplied customer. In respect of the suppliers, the column of the table illustrated in Figure 19 are summed to generate the payments relating to each supplier. Therefore, the monetary value relating to payments due by the supplier 140-2 is calculated as £70.59, being the sum of £9.31 and £61.28. These data are then used to generate advice notes, which are sent by post and electronically to the trading parties for payments to be effected.

Payments are taken from trading party bank accounts to a clearing account 184 managed on behalf of the electricity market 100. This clearing account 184 then passes payments to creditors (in this case the generators), in order to resolve payments for the day of trade in question. In traditional methods of payment, this process takes three days. After three days, confirmation is received from the banks that payments have been made, and the user can initiate the generation of confirmation notes, by means of the confirmation note generator 304. The same data as is used to generate advice notes is used in the generation of the confirmation notes.

Whereas Figures 17 to 19 relates to an initial settlement run, i.e. one carried out only fifteen days after the day of trade in question, further runs are carried out on a reconciliation basis at later time. Reconciliation runs are performed in order to correct any anomalies which might have arisen to incorrect forecasting, data being improved over time as more customer meters are checked. In Figure 20, a file is illustrated having been received from the individual data aggregator 162, thirty five working days after the day of trade in question, in preparation for a first reconciliation run. The file 410' has the same structure as that illustrated in Figure 18. Further, the monetary values stored in respect of generators and directly supplied customers remain unchanged. That is because those data are the result of direct measurement, and are unlikely to be incorrect from one run to the next.

However, the data stored in the list 422 are revised from the previous settlement run. Firstly, element 2 of list 422S has been supplied in its original form, namely £62.08, whereas element 3 has been revised to £3.10. Moreover, elements 3 and 4 of list 422E have been revised. The reconciliation file 410' is handled by the control balance checker 282 as described previously. In this case, the lists 422 are found to balance with the generator data and with the grid supply point totals in the bulk data previously supplied. Therefore, no adjustment is necessary.

In the case of a reconciliation run, the payment creation unit creates payment data on the basis of not only the new data stored in the received file 410', but also with regard to the data stored in the database 250 from the previously supplied data as adjusted, as illustrated in Figure 19. Therefore, payments data are created as an adjustment to those originally stored data as illustrated in Figure 19. In the present example, the new data is consistent with the old data in respect of supplier 140-1, and supplier 140-5, and so no net payment adjustment is made to those suppliers. Further, in respect of supplier 140-2, the new total is £71.39. The old total was £70.59. Therefore, the supplier 140-2 must pay a further £0.80 (80 pence) in order to reconcile the difference between the new data and the old data. In the same way, supplier 140-3 must be in receipt of £4.74 in order to reconcile the fact that the new data reflects that it should have paid less than it originally paid in the settlement described above. In the same way, data for supplier 140-4 shows that that supplier should pay a further £3.94 (being a difference between £61.88 and £57.94) in order to reconcile its contribution to the market. In the reconciliation run, none of the transactions affect the payments made to the generators. There is no inconsistency in the data relating thereto, because generator data is the result of direct measurement. Reconciliations are necessary because supplier data is to a large extent the result of forecasting, which is inherently inaccurate in some circumstances.

Although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source code, object code, a code intermediate source and object code such as in partially compiled form, or in any other form suitable for use in the implementation of the processes according to the invention. The carrier be any entity or device capable of carrying the program.

For example, the carrier may comprise a storage medium, such as a ROM, for example a CD ROM or a semiconductor ROM, or a magnetic recording medium, for example a floppy disk or hard disk. Further, the carrier may be a transmissible carrier such as an electrical, optical or electromagnetic signal which may be conveyed via electrical or optical cable or by radio or other means.

When the program is embodied in a signal which may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes, such as an Application Specific Integrated Circuit, a Digital Signal Processor or the like.

## Claims

1. A method of generating a work schedule, said schedule mapping tasks to be generated daily in a period of consecutive days to working days on which tasks are to be performed, said method comprising:
identifying, in a period comprising a plurality of consecutive days each generating a daily generated task, days on which tasks cannot be performed;
allocating each daily generated task to a working day a predetermined number of working days before, on or after the day corresponding with said daily generated task;
reallocating a task to a preceding or following working day in the case that a working day has allocated thereto a number of tasks higher than other working days, provided that the average, in the period of consecutive days, of the number of consecutive days between a day corresponding with a daily generated task and its allocated working day remains within a predetermined range.

2. A method in accordance with claim 1 wherein said reallocating step is performed provided that the number of consecutive days between a day corresponding with said reallocated task and its allocated working day remains within a predetermined range.

3. A method in accordance with claim 1 or claim 2 wherein said reallocating step is performed provided that the number of working days between a day corresponding with said reallocated task and its allocated working day remains within a predetermined range.

4. A method in accordance with any preceding claim wherein said allocating step consists of allocating each daily generated task to a working day a predetermined number of working days after the day corresponding with said daily generated task.

5. A method in accordance with any preceding claim wherein said reallocating step is performed provided that reallocation does not cause the number of tasks to be performed on the newly allocated working day to be equal to the number of tasks previously allocated to the previously allocated working day.

6. A method in accordance with any preceding claim wherein said identifying step comprises the steps of determining weekly non working days on which tasks habitually cannot be performed; and
receiving a list of exceptional non working days within said period in addition to said habitual weekly non working days.

7. Apparatus for generating a work schedule, said schedule mapping daily generated tasks to working days on which tasks are to be performed, said apparatus comprising means for identifying, in a period comprising a plurality of consecutive days each having a corresponding daily generated task, non working days on which tasks cannot be performed, means for allocating each daily generated task to a working day a predetermined number of working days before, on or after the day corresponding with said daily generated task, means for identifying a working day having allocated thereto a number of tasks higher than or equal to the number of tasks allocated to other working days, and means for reallocating a task allocated to a working day identified by said working day identifying means to a preceding or following working day provided that the average, in the period of consecutive days, of the number of consecutive days between a day corresponding with a daily generated task and its allocated working day remains within a predetermined range.

8. Apparatus in accordance with claim 7 wherein said reallocating means is operable to reallocate a task provided that the number of consecutive days between a day corresponding with said reallocated task and its allocated working day remains within a predetermined range.

9. Apparatus in accordance with claim 7 or claim 8 wherein said reallocating means is operable to reallocate a task provided that the number of working days between a day corresponding with said reallocated task and its allocated working day remains within a predetermined range.

10. Apparatus in accordance with one of claims 7 to 9 wherein said allocating means is operable to allocate each daily generated task to a working day a predetermined number of working days after the day corresponding with said daily generated task.

11. Apparatus in accordance with one of claims 7 to 10 wherein said reallocating means is operable to reallocate provided that reallocation does not cause the number of tasks to be performed on the newly allocated working day to be equal to the number of tasks previously allocated to the previously allocated working day.

12. Apparatus in accordance with one of claims 7 to 11 wherein said non working day identifying means comprises means for determining weekly non working days on which tasks habitually cannot be performed and means for receiving a list of exceptional non working days within said period in addition to said habitual weekly non working days.

13. A computer readable storage medium storing a work schedule generated by the method of any one of claims 1 to 6.

14. A computer receivable signal carrying data defining a work schedule generated by a method in accordance with any of claims 1 to 6.

15. A computer program product operable to configure a computer to perform the method of any of claims 1 to 6.

16. A computer program product operable to configure a computer as apparatus in accordance with any of claims 7 to 12.

17. A storage medium storing processor executable instructions operable to configure a processor to operate in accordance with the method of any of claims 1 to 6.

18. A storage medium storing processor executable instructions operable to configure a processor as apparatus in accordance with any of claims 7 to 12.

19. A signal carrying processor executable instructions operable to configure a processor to operate in accordance with any of claims 1 to 6.

20. A signal carrying processor executable instructions operable to configure a processor as apparatus in accordance with any of claims 7 to 12.

21. Data processing apparatus for processing trading data and for generating a payment advice message in accordance with said trading data, including means for receiving a work schedule generated by a method in accordance with any one of claims 1 to 6, means for receiving trading data relating to a day of trade contained in said work schedule, means for checking said received data against said work schedule to establish if said data is expected, means for processing said data to generate payments data from which advice notes can be generated, means for receiving a user input, and means, responsive to a user input, for generating payment advice messages on the basis of said generated data.

22. Apparatus in accordance with claim 21 and including electronic signal generation means, for generating a signal carrying a generated payment advice message, in use.

23. Data processing apparatus for processing trading data and for generating a payment advice message in accordance with said trading data, including first receiving means operable to receive trading data representative of overall trade in areas of a trading region, second receiving means operable to receive trading data representative of activity of traders within said areas of said trading region, means for verifying conformity of data received by said first receiving means with data received by said second receiving means, means for adjusting said second trading data in order to attain conformity with said first trading data, means for aggregating said second trading data into trading totals, each trading total corresponding to a trader having activity in at least one of said trading areas, and means for generating a payment advice message in respect of each trader on the basis of said aggregated data.

24. Apparatus in accordance with any one claims 22 to 23, wherein said advice message generating means is operable to generate an advice message operable to configure a printing apparatus to generate a payment advice document.
